# EUROPÄISCHE PATENTSCHRIFT

(11) **EP 2 189 694 B1**
(45) Veröffentlichungstag und Bekanntmachung des Hinweises auf die Patenterteilung: **21.03.2012**
(21) Anmeldenummer: 08169825.0
(22) Anmeldetag: 24.11.2008
(51) Int. Cl.: F16L 3/14, F16L 3/10, F16L 3/24

(54) **Rohrschelle**
Pipe clip
Collier

(43) Veröffentlichungstag der Anmeldung: 26.05.2010
(73) Patentinhaber: Zurecon AG, 8003 Zürich (CH)
(72) Erfinder: Pfluger, Gerd, 4625 Oberbuchsiten (CH)
(74) Vertreter: Rutz & Partner

(56) Entgegenhaltungen:
- DE-A1- 3 522 071
- DE-C1- 3 804 940
- DE-U1- 9 013 433
- FR-A- 2 214 343
- JP-A- 8 303 650

## Beschreibung

Die Erfindung betrifft eine der Installation von Leitungen, insbesondere Rohren dienende Rohrschelle nach dem Oberbegriff des Patentanspruchs 1.

Für die Zuführung und Verteilung von Medien wie Elektrizität, Gas, Wasser, Fernwärme, Telefon, Kabel TV in Bauten werden Installations- und Montagevorrichtungen verwendet, wie sie in [1], Produktkatalog der LANZ OENSINGEN AG, April 2003 gezeigt und beschrieben sind. Beispielsweise werden von Trägern oder Stützen gehaltene Kabelkanäle oder Gitterbahnen verwendet, in welche die zu installierenden Rohre, Leitungen und Kabel eingelegt werden.

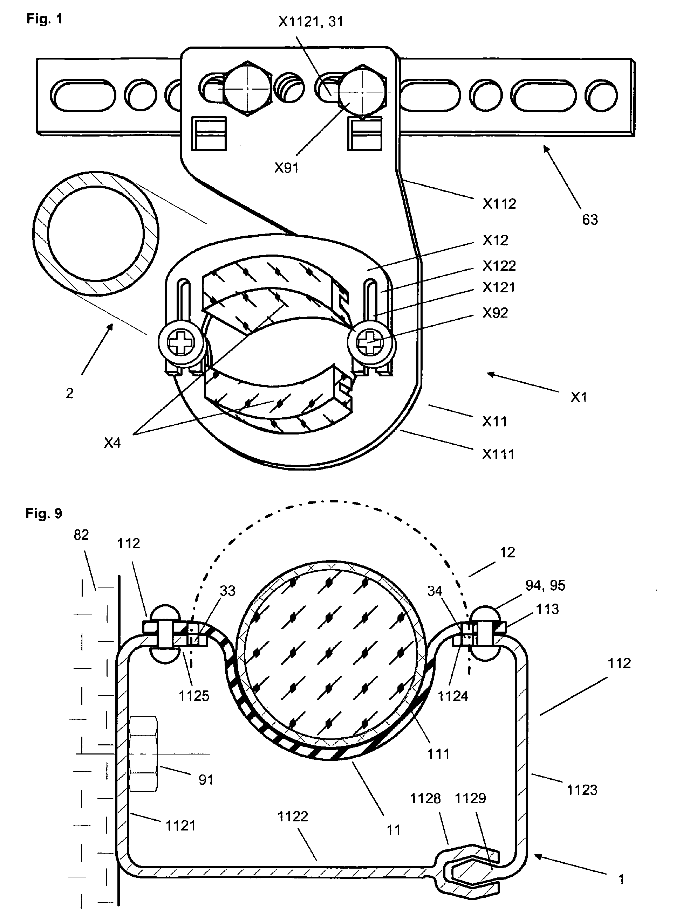

Zur Installation einzelner Rohre und Leitungen werden Rohrschellen verwendet, wie sie in [1], Seiten 60-65 beschrieben und nachstehend in den Figuren 1 bis 3 im Detail dargestellt sind. Rohrschellen dieser Art werden an Trägern, Stützen, Auslegern, Profilteilen oder direkt an einer Wand oder der Decke eines Raumes montiert.

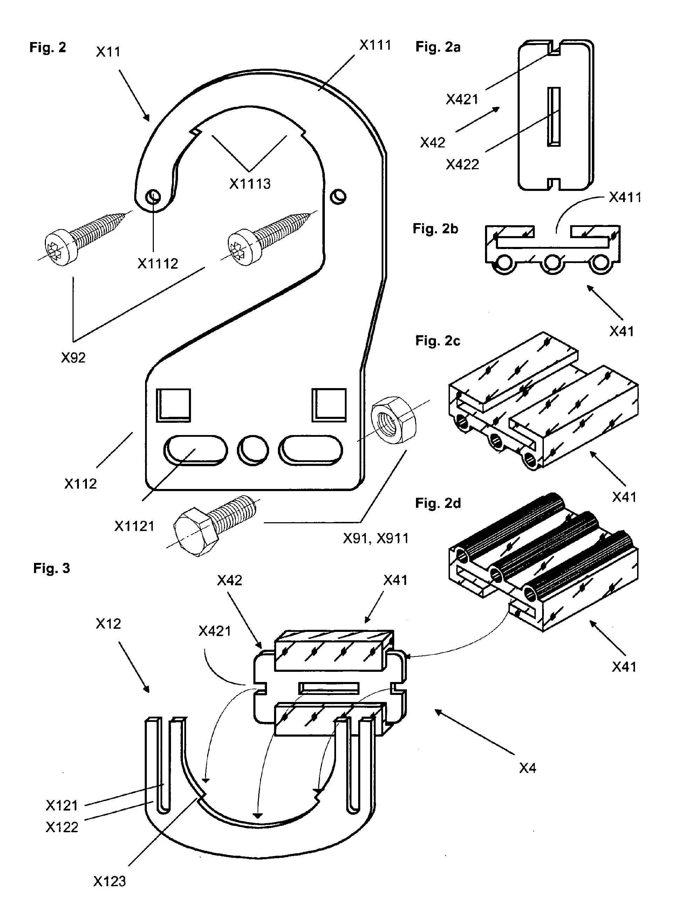

Figur 1 zeigt die in [1], Seite 61 gezeigte Rohrschelle vom Typ V, die an einer mit Montageöffnungen versehenen Profilschiene 63 montiert ist. Diese bekannte Rohrschelle X1, die anhand der Figuren 2 und 3 näher erläutert wird, weist ein Systemelement X11 auf, an dem ein der Aufnahme eines Rohres 2 dienendes und mit einem Abschlussbügel X12 abschliessbares Aufnahmeteil X111 und ein mit Montageöffnungen X1121 versehenes Montageteil X112 vorgesehen ist. Das Aufnahmeteil X111, das eine annähernd halbkreisförmige Ausnehmung aufweist, ist beidseits der Ausnehmung mit Gewindebohrungen versehen, in die der Befestigung des Abschlussbügels X12 dienende Verbindungsschrauben X92 eindrehbar sind. Der mit einer annähernd halbkreisförmigen Ausnehmung versehene Abschlussbügel X12, der die Form eines gegen das Aufnahmeteil X111 geöffneten Bogens aufweist, weist beidseits der Ausnehmung gabelförmige Endstücke X122 mit nach aussen geöffneten Schlitzen X121 auf, die, wie in Figur 1 gezeigt, je der Aufnahme eines Schafts der Verbindungsschrauben X92 dienen. Nach dem Lösen der Verbindungsschrauben X92 kann der Abschlussbügel X12 soweit gegen das Aufnahmeteil X111 hin verschoben werden, bis das installierte Rohr 2 fest umschlossen ist. Figur 2 zeigt das Systemelement X11 von Figur 1 um 180° gedreht. Das Systemelement X11 kann auch in dieser Lage montiert werden. Allerdings kann das Montageteil X12 (siehe Figur 3) in diesem Fall ausfallen, sobald sich die Montageschrauben X92 lösen.

Zur Schalldämmung, zur Vermeidung von störenden Druckstellen, zum elastischen Halten und gegebenenfalls zur Isolation des Rohrs 2 sind das Aufnahmeteil X111 und der Abschlussbügel X12 an den einander zugewandten Seiten mit elastischen bzw. flächigen Stützelementen X4 versehen, die aus einem von einem Federblatt X42 gehaltenen Lagerelement X41 aus Gummi oder Kunststoff besteht. Figur 2a zeigt ein nahezu rechteckiges Federblatt X42 aus Stahl, das mit einem Mittelschlitz X422 und an beiden Enden mit Kerben X421 versehen ist. Das Federblatt X42 kann derart in den Abschlussbügel X12 und das Aufnahmeteil X111 eingelegt werden, dass zwei dort vorgesehene Haken X1113 bzw. X123 von entgegengesetzten Richtungen in die Kerben X421 eingreifen und das Federblatt X42 nach unten gebogen halten, wobei zusätzlich Elemente des Abschlussbügels X12 oder des Aufnahmeteils X111 in den Mittelschlitz X421 eingreifen und das Federblatt X42 stabilisieren.

Die Figuren 2b, 2c und 2d zeigen in zwei- und dreidimensionalen Darstellungen ein extrudiertes Lagerelement X41 in der Form eines der Aufnahme des Federblatts X42 dienenden T-Profils. Figur 3 zeigt das Lagerelement X41 mit dem eingelegten Federblatt X42 während der Montage am Abschlussbügel X12.

Durch die Montageöffnungen X1121 des Montageteils X112 und durch Öffnungen in der Profilschiene 63 hindurch sind Montageschrauben X91 führbar, mittels derer die Rohrschelle X1 fest mit der Profilschiene 63 verbindbar ist.

Von Vorteil bei dieser bekannten Rohrschelle ist, dass die installierten Leitungen schonend gehalten werden, so dass Schädigungen und Defekte weitgehend vermieden werden. Nachteilig hingegen ist insbesondere der aufwändige Aufbau der Rohrschelle, der einen grossen Materialaufwand, einen hohen Herstellungsaufwand sowie einen hohen Montageaufwand verursacht. Die zahlreichen verschiedenen Teile müssen einzeln mit entsprechendem Aufwand produziert und mit Geschick zusammengefügt werden.

Zudem besteht die Gefahr, dass einzelne der Teile, insbesondere die aufgesetzten Lagerelemente verloren gehen können, oder aufgrund punktuell hoher Belastungen bald verschlissen werden.

Besonders nachteilig ist ferner, dass die Verwendungsmöglichkeiten dieser Rohrschelle im Wesentlichen auf die Montage an der genannten Profilschiene begrenzt sind.

Da das Systemelement der bekannten Rohrschelle aus einer Metallplatte ausgestanzt ist und in einer Ebene liegt, die von dem installierten Rohr senkrecht durchlaufen wird, ist auch die Möglichkeit zur Montage von Rohren mit verschiedenem Durchmesser eng begrenzt.

Von den Herstellern müssen verschiedene Modelle von Rohrschellen zur Verfügung gestellt werden, angepasst an die möglichen Installationssituationen und an die verschiedenen Durchmesser der zu installierenden Leitungen und Rohre.

Die oben beschriebenen Nachteile bekannter Vorrichtungen lassen sich insbesondere auch anhand der nachstehenden Dokumente nachweisen.
[2], US 5 794 895 A (siehe auch die DE 19511464 A1), offenbart eine Vorrichtung zum Halten und Führen von Kabeln in Schaltschränken mit einem Haltebügel, der mit einem Träger des Schaltschrankes über eine Befestigungsplatte mittels Befestigungsmitteln lösbar verbunden ist. Zur Aufnahme der Kabel und Schläuche ist ein von der Befestigungsplatte abstehender Bügelabschnitt mit einem eingebogenen Endabschnitt vorgesehen, der von einem ebenfalls von der Befestigungsplatte abstehenden Abdeckabschnitt unter Freilassen einer Einführöffnung übergriffen wird. Als Befestigungsmittel dient ein Rastbügel der die Befestigungsplatte des Haltebügels übergreift, und mit Seitenschenkeln in entsprechend beabstandete Rastschlitze des Trägers eingreift. Diese Lösung erfordert daher Montagemittel, die speziell für den beschriebenen Schaltschrank ausgestaltet sind. Ferner sind die installierten Kabel vom Haltebügel nur lose gehalten.
[3], US 4 042 198 A, offenbart eine an der Oberseite montierbare Aufhängevorrichtung für Rohre mit einem Aufnahmeteil, das an Rohre mit einem bestimmten Durchmesser angepasst und daher nicht für Rohre mit unterschiedlichen Durchmessern verwendbar ist.
[4], JP 09 229238 A, offenbart eine an der Oberseite montierbare Aufhängevorrichtung, die dem Einlegen von Kabeln dient, die nur lose gehalten werden. Diese relativ aufwändig gestaltete Aufhängevorrichtung ist daher nur beschränkt einsetzbar und erlaubt keine spielfreie Montage der zu installierenden Leitungen, weshalb insbesondere auch mit störenden Geräuschen zu rechnen ist, wenn der Fluss von Medien in den installierten Rohren zu und abgeschaltet wird. Weiterhin können aufgrund der losen Lagerung der Leitungen Verschiebungen auftreten, durch die die installierten Leitungen unvorteilhaft beeinträchtigt werden.
[5], US 6 629 676 B1, offenbart eine weitere Aufhängevorrichtung in die Rohre und Leitungen lose eingelegt werden, weshalb auch hier die beschriebenen Nachteile resultieren. Diese Aufhängevorrichtung weist ferner ein Kopfstück auf, welches mehrere, jedoch nicht vorteilhafte Montagemöglichkeiten bietet.
[6], EP 1 286 443 A, offenbart ein dem Aufhänge von Kabeln dienendes Befestigungselement mit einem mit an der Decke montierbaren, abgewinkelten Befestigungsteil und einem hakenförmig ausgebildeten Aufnahmeteil, die nur lose miteinander verbunden sind. Auch mit dieser Vorrichtung lassen sich daher Leitungen und Rohre mit unterschiedlichem Durchmesser nicht spielfrei montieren. Ferner resultiert auch für diese Vorrichtung nur eine einzige Montagemöglichkeit.

Aus der DE 90 13 433 U1 ist eine Vorrichtung bekannt, die zur Fixierung des Abstandes von an einem Träger festzulegenden Rohrleitungen geeignet ist und dazu eine Rohrschelle aufweist, die aus zwei einander entsprechenden und miteinander verbindbaren Hälften besteht, von denen die eine an einem u-förmigen Halter gehalten ist. Beide Hälften der Rohrschelle sind starr ausgestaltet, weshalb nur Rohre eines bestimmten Durchmessers installiert werden können.

Aus der DE 38 04 940 C1 ist eine weitere Rohrschelle bekannt, welche zwei starre Scheilenelemente aufweist.

Aus der DE 35 22 071 A1 ist eine Rohrschelle bekannt, welche ein starres Schellenelement aufweist, auf dessen Oberseite Rohre mit unterschiedlichen Durchmessern mittels eines flexiblen Bandes wahlweise montierbar sind.

Zu beachten ist ferner, dass bei den aus dem Stand der Technik bekannten Montagevorrichtungen bzw. Rohrschellen oft eine ungenügende Fixierung der installierten Leitung resultiert, weshalb beim Gebrauch der Leitung störende Geräusche resultieren, die kaum mehr beseitigt werden können und zu einer dauernden Störung des Anwenders führen. Dem Fachmann ist bekannt, dass beim Öffnen und Schliessen von Ventilen das in den Leitungen geführte Medium oft stossweise transportiert wird, wodurch Schläge auf die Leitung und die Rohrschellen einwirken.

Der vorliegenden Erfindung liegt daher die Aufgabe zugrunde, eine verbesserte Rohrschelle zu schaffen, mittels der Leitungen, insbesondere, Rohre, vorteilhaft installiert werden können.

Insbesondere ist eine einfach aufgebaute und daher kostengünstig und automatisiert herstellbare Rohrschelle zu schaffen, die unter verschiedenen Installationsbedingungen vielseitig montierbar und zum spielfreien, stabilen und Material schonenden Halten von Rohren und Leitungen geeignet ist, die unterschiedliche Durchmesser aufweisen können.

Dabei soll gewährleistet bleiben, dass die durch den Medientransport in den Leitungen verursachte Geräuschentwicklung, unabhängig vom jeweiligen Durchmesser der installierten Leitung, minimal bleibt.

Diese Aufgabe wird mit einer Rohrschelle gelöst, welche die in Anspruch 1 angegebenen Merkmale aufweist. Vorteilhafte Ausgestaltungen der Erfindung sind in weiteren Ansprüchen angegeben.

Die für die Installation von Leitungen, insbesondere Rohren, vorgesehene Rohrschelle umfasst ein ein- oder mehrteiliges Systemelement, das ein der Montage der Rohrschelle dienendes ein- oder mehrteiliges Montageteil, ein Aufnahmeteil mit einem ersten und einem zweiten Endstück sowie ein Abschlusselement aufweist, das dem Halten der in das Aufnahmeteil eingelegten Leitung dient und dazu mit dem Systemelement verbindbar ist.

Erfindungsgemäss sind die durch ein flexibles und/oder dehnbares Aufnahmesegment miteinander verbunden Endstücke des Aufnahmeteils fest oder lösbar je mit einem ersten und/oder zweiten Montageteilstück des Montageteils verbunden, wobei wenigstens eines der Montageteilstücke mit wenigstens einem Montageelement versehen ist, mittels dessen die Rohrschelle beispielsweise an einer Wand oder Decke montierbar ist.

Die erfindungsgemässe Rohrschelle kann in einfacher Weise montiert werden, indem das erste oder das zweite Montageteilstück mit einem Installationskörper, z.B. der Decke oder einer Wand eines Gebäudes, einer Deckenstütze oder einem Ausleger vorzugsweise formschlüssig verbunden, gegebenenfalls verschraubt wird.

Aufgrund der elastischen Ausgestaltung des Aufnahmesegments kann die Rohrschelle für die Installation von Leitungen verwendet werden, deren Durchmesser sich bis zu einem Mehrfachen voneinander unterscheiden. Dabei ist sichergestellt, dass die installierte Leitung, unabhängig von deren Durchmesser, spielfrei und schonend gehalten wird und mittels des Abschlusselements zuverlässig fixiert werden kann.

Das einseitig oder beidseitig gehaltene Aufnahmeteil oder nur das Aufnahmesegment ist dabei aus einem flexiblen, gegebenenfalls biegeelastischen und/oder dehnbaren Material gefertigt. Beispielsweise sind Kunststoffmaterialien, Textilien, Naturstoffe wie Leder, oder auch biegeelastische Metalle, wie Metallbänder, einsetzbar. Kunststoffe können dabei, zum Beispiel mit flexiblen Metallelementen, wie Metallbändern, verstärkt sein.

In einer vorzugsweisen Ausgestaltung ist das Aufnahmesegment derart flexibel und/oder dehnbar, dass die auf dessen Unterseite oder Oberseite eingelegte und vom Abschlusselement gehaltene Leitung teilweise umfasst wird. Dadurch resultieren verschiedene weitere vorteilhafte Möglichkeiten zur vorteilhaften Nutzung bzw. zur Montage der erfindungsgemässen Rohrschelle.

Das flexible Aufnahmesegment kann dabei einstückig mit den vorzugsweise starren Endstücken des Aufnahmeteils verbunden und gegebenenfalls durch mechanische, thermische oder chemische Behandlung flexibilisiert sein. Beispielsweise wird ein Kunststoffband verwendet, dessen Mittelteil unter mechanischer und/oder thermischer Einwirkung mit einer zumindest partiell reduzierten Dicke versehen wird. Beispielsweise werden Kanäle oder Rillen in das Mittelteil eingearbeitet oder beim Giessen oder Extrudieren darin vorgesehen, durch die die Materialstärke soweit reduziert wird, dass die gewünschte Flexibilität erreicht wird. Die Endstücke des Aufnahmeteils bleiben hingegen ungeschwächt und sind entsprechend stabil.

Alternativ kann das flexible Aufnahmesegment durch mechanische Verbindungsmittel, wie Nieten, Haken, Klemmen oder ineinander greifende Profile mit den Endstücken des Aufnahmeteils verbunden werden.

Die mit zwei oder mehreren Montageteilstücken versehene Rohrschelle ist daher praktisch universell einsetzbar und somit für den Handwerker von grossem Nutzen.

Der Handwerker muss nicht mehr unter verschiedenen Rohrschellen das für den vorhandenen Rohrdurchmesser und die Montageart genau passende Modell aussuchen, sondern kann, innerhalb einer bestimmten Durchmesser-Bandbreite, die universell einsetzbare erfindungsgemässe Rohrschelle verwenden.

Für den Hersteller und Wiederverkäufer ergeben sich ebenfalls zahlreiche Vorteile. Da alle erfindungsgemäss ausgestalteten Systemelemente, die verschiedene Funktionen erfüllen, aus einem einzigen band- oder plattenförmigen Metallelement einstückig gefertigt werden können, resultiert ein minimaler Herstellungsaufwand. Aufgrund der universellen Verwendbarkeit der erfindungsgemässen Rohrschelle kann der Hersteller, Wiederverkäufer und Handwerker das Sortiment stark reduzieren, wodurch sich Kostenreduktionen in den Bereichen der Vermarktung, Lagerung, Logistik und Materialdisposition auf der Baustelle ergeben.

Durch die vorzugsweise flexible Ausgestaltung des Aufnahmesegments, das an der installierten Leitung anliegt und diese teilweise umfasst, ergibt sich eine flächige und schonende Lagerung. Die Belastung der Leitung durch die Rohrschelle ist aufgrund des geringen resultierenden Flächendrucks minimal. Die Montage von zusätzlichen Lagerelementen z.B. aus Gummi, ist dabei nicht notwendig, weshalb die Herstellungskosten der Rohrschelle auch deshalb relativ gering sind.

Durch die flexible Ausgestaltung des Aufnahmesegments, welches vorzugsweise aus einem elastischen Kunststoff gefertigt wird, ergibt sich ferner der Vorteil, dass Körperschall durch die erfindungsgemässen Rohrschellen stark gedämpft wird, weshalb durch Medien verursachte Schwingungen zu keiner störenden Geräuschentwicklung innerhalb des betreffenden Gebäudes führen.

Das Aufnahmeteil und das vorzugsweise flexible Abschlusselement können in vielfältiger Weise mittels zueinander korrespondierender Verbindungselemente miteinander verbunden werden. Verbindungselemente für das Abschlusselement können in die Endstücke oder in das Aufnahmesegment des Aufnahmeteils eingearbeitet sein und/oder separat vorgesehen werden. Verbindungselemente für das Abschlusselement können ferner am Montageteil vorgesehen werden. Die Anordnung der Verbindungselemente am Aufnahmeteil ist jedoch besonders vorteilhaft, da dieses anhand des Abschlusselements daher mit der Leitung verbunden und erst anschliessend in das Montageteil eingesetzt werden kann. Ohne das eingesetzte Aufnahmeteil kann zudem das Montageteil einfacher montiert werden.

In den Endstücken des Aufnahmeteils können Gewindebohrungen vorgesehen sein, die zu Montageschrauben korrespondieren die durch Öffnungen in den Endstücken eines Abschlusselements hindurch geführt werden.

In vorzugsweisen Ausgestaltungen weist die erfindungsgemässe Rohrschelle ein Montageteil mit wenigstens zwei voneinander lösbaren Elementen auf, die zueinander korrespondierende Kopplungselemente aufweisen, die eine Kopplungsvorrichtung bilden. Die beiden Elemente des Montageteils können daher voneinander gelöst werden, wodurch eine zu installierende Leitung in das mit dem Aufnahmeteil verbundene Montageteil eingelegt werden kann. Diese Kopplungsvorrichtung kann innerhalb oder peripher an oder zwischen beliebigen Teilstücken des Montageteils vorgesehen werden.

Besonders vorteilhaft sind feste oder flexible Abschlusselemente mit Endstücken einsetzbar, die mit Arretierelementen versehen sind. Beispielsweise wird ein Abschlussbügel mit hakenförmigen Elementen vorgesehen, der soweit in die Aufnahmeöffnungen im Aufnahmeteil eingeführt wird, bis das installierte Rohr fixiert ist und die hakenförmigen Elemente in den Aufnahmeöffnungen gehalten sind.

Alternativ kann ein mit hakenförmigen Elementen versehener Kunststoffgurt vorgesehen sein, dessen Endstücke in die Aufnahmeöffnungen im Aufnahmeteil eingeführt und eingerastet werden. Vorzugsweise wird eines der Endstücke des Abschlusselements mittels eines Ankerelements fest mit dem Aufnahmeteil verbunden, so dass nur noch das mit hakenförmigen Verbindungselementen versehene zweite Endstück in die freie Aufnahmeöffnung im Aufnahmeteil eingeführt und festgezogen werden muss.

Weiterhin können die Endstücke eines Abschlusselements, welches durch Aufnahmeöffnungen im Aufnahmeteil und/oder im Montageteil hindurch geführt wurde, miteinander verbunden werden.

Nachfolgend wird die Erfindung anhand von Zeichnungen näher erläutert. Dabei zeigt:
- Fig. 1: die eingangs beschriebene und aus [1] bekannte Rohrschelle X1 mit einem Systemelement X11, das an einer Profilschiene 63 montierbar ist und dem Halten eines Rohres 2 dient, welches mittels eines Abschlussbügels X12 fixierbar ist;
- Fig. 2: das mit einem Aufnahmeteil X111 und einem Montageteil X112 versehene Systemelement X11 der Rohrschelle X1 von Fig. 1;
- Fig. 2a: das in das Aufnahmeteil X111 oder den Abschlussbügel X12 einsetzbare Federblatt X42;
- Fig. 2b: das auf das Federblatt X42 aufsetzbare Kunststoffteil X41 in zweidimensionaler Darstellung;
- Fig. 2c: das Kunststoffteil X41 von Fig. 2b in dreidimensionaler Darstellung von unten gesehen;
- Fig. 2d: das Kunststoffteil X41 von Fig. 2b in dreidimensionaler Darstellung von oben gesehen;
- Fig. 3: den Abschlussbügel X12 der Rohrschelle X1 von Fig. 1 während des Einsetzens des mit dem Kunststoffteil X41 versehenen Federblatts X42;
- Fig. 4: eine an einer Wand 82 montierte Rohrschelle 1 mit einem schematisch gezeigten Abschlusselement 12, und einem zweiteiligen Systemteil 11, das ein dem Halten einer Leitung 2 dienendes Aufnahmeteil 111 mit einem zwischen zwei Endstücken 1112, 1113 gehaltenen flexiblen Aufnahmesegment 1111 und ein zumindest annähernd U-Profil-förmiges Montageteil 112 mit drei einstückig miteinander verbundenen Teilstücken 1121, 1122, 1123 aufweist, an denen zwei gegeneinander gerichtete Flanschelemente 1124, 1125 vorgesehen sind;
- Fig. 5: die Rohrschelle 1 von Figur 4 in dreidimensionaler Darstellung und in der in Figur 4 gezeigten Lage, in der das flexible Aufnahmesegment 1111 in das U- Profil-förmige Montageteil 112 hineinragt;
- Fig. 6: die an der Decke 81 des Gebäudes montierte Rohrschelle von Figur 4;
- Fig. 7: die Rohrschelle 1 von Figur 4 in dreidimensionaler Darstellung und in der in Figur 6 gezeigten Lage, in der das flexible Aufnahmesegment 1111 nach aussen ragt;
- Fig. 8a-b: die Rohrschelle 1 von Figur 4 mit einem Montageteil 112 bestehend aus zwei Elementen 1121, 1122 bzw. 1123 die je mit einem Kopplungselement 1128, 1129 einer Kopplungsvorrichtung versehen sind;
- Fig. 10: ein vorzugsweise ausgestaltetes Aufnahmeteil 111, mit einem in Montageöffnungen 33, 34 gehaltenen Abschlusselement 12 und mit Öffnungen 36, mittels derer das Aufnahmeteil 111 z.B. anhand von Schrauben oder Haken mit dem Montageteil 112 verbindbar ist;
- Fig. 11a: ein flexibles Abschlusselement 12A aus Metall oder Kunststoff, welches an beiden Enden mit Verbindungselementen 121 versehen ist, die in den Montageöffnungen 33, 34 einrasten können;
- Fig. 11b: ein flexibles Abschlusselement 12B, welches an einem Enden mit Verbindungselementen 121 und am anderen Ende mit einem Ankerelement 122 versehen ist, das der Verankerung in einer der Montageöffnungen 33, 34 des Montageteils 112 dient; und
- Fig. 11c: ein mittels Schrauben 92 und Schraubenmuttern 93 mit dem Montageteil 112 verbindbares Abschlusselement 12C.

Die Figuren 1, 2 und 3 zeigen die aus [1] bekannte und eingangs beschriebene Rohrschelle X1 sowie Teile davon.

Die Figuren 2a - 2d zeigen die eingangs beschriebenen aufwändig gestalteten und nur mit grossem Aufwand montierbaren Stützelemente X4 und Teile X41, X42 davon, deren Verwendung bei der erfindungsgemässen Rohrschelle 1 vorteilhaft vermieden wird.

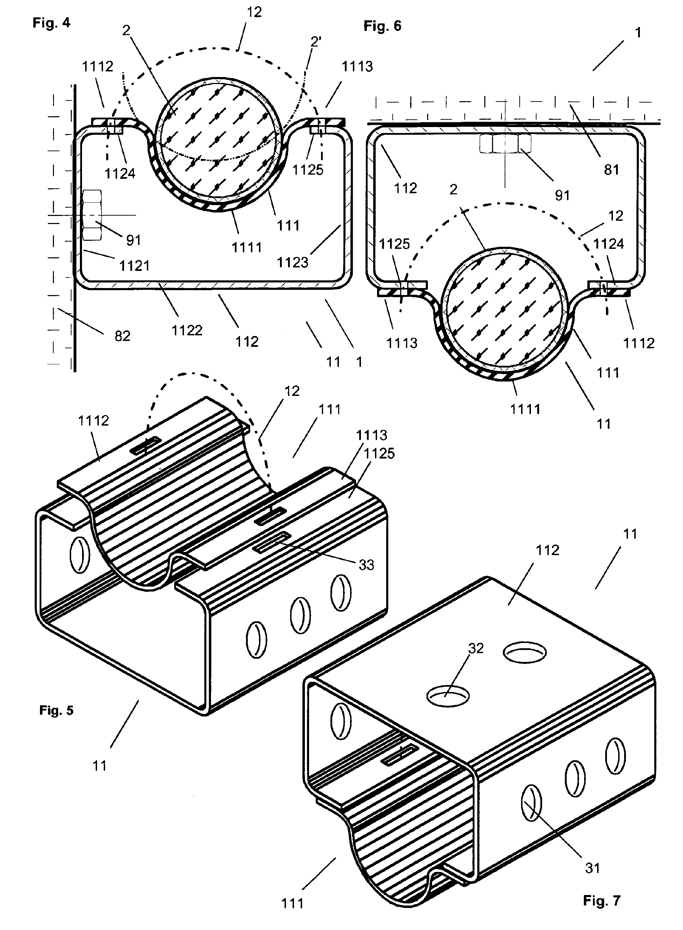

Die Figuren 4, 5 und 6 zeigen eine erste erfindungsgemässe Rohrschelle 1 mit einem schematisch gezeigten Abschlusselement 12 und einem dazu korrespondierenden zweiteiligen Systemteil 11, das ein dem Halten einer Leitung 2 dienendes Aufnahmeteil 111 und ein Montageteil 112 umfasst, das mittels einer Montageschraube 91 an der Decke 81 oder einer Wand 82 eines Gebäudes montierbar ist.

Das beispielsweise aus einem Metallband oder einer Metallplatte ausgestanzt Montageteil 112 weist ein erstes, zweites und drittes Montageteilstück 1121, 1122, 1123 auf, die, einstückig miteinander verbunden, ein U-Profil bilden. An den Enden des ersten und zweiten Montageteilstücks 1121, 1123 sind Flanschelemente 1124 bzw. 1125 vorgesehen, die gegeneinander gerichtet sind und der Verbindung mit dem Aufnahmeteil 111 dienen. In weiteren vorzugsweisen Ausgestaltungen können die Flanschelemente 1124 bzw. 1125 auch nach aussen gerichtet sein.

Das der Aufnahme einer Leitung 2 dienende Aufnahmeteil 111 weist zwei Endstücke 1112, 1113 auf, die durch ein flexibles und/oder dehnbares Aufnahmesegment 1111 miteinander verbunden sind. Ferner ist ein schematisch gezeigtes Abschlusselement 12 vorgesehen, mittels dessen eine in das Aufnahmeteil 111 eingelegte Leitung 2 fixiert werden kann.

In der in Figur 4 gezeigten Lage der Rohrschelle 1 ist das U-Profil-förmige Montageteil 112 nach oben geöffnet, weshalb das flexible und/oder dehnbare Aufnahmesegment 1111 durch Einwirkung der Schwerkraft in dieses hineinragt. Das flexible Aufnahmesegment 1111 kann im Prinzip gegeneinander drehbare Glieder beliebiger Grösse aufweisen oder aus einem Tuch oder Kunststoff bestehen. In vorzugsweisen Ausgestaltungen ist das Aufnahmesegment 1111 nicht nur flexibel, sondern auch dehnbar bzw. elastisch, so dass eine optimierte Anpassung an die installierte Leitung erfolgt, deren Durchmesser in einem weiten Bereich variieren kann.

Die installierte Leitung 2 ist von aussen auf das flexible Aufnahmesegment 1111 aufgesetzt und ragt mit ihrem Querschnitt teilweise in das U-Profil des Montageteils 112 hinein. Sofern das Aufnahmesegment 1111 nicht nur flexibel, sondern auch dehnbar ist, so kann die Leitung 2 durch Anziehen des Abschlusselements 12 vollständig in das U-Profil des Montageteils 112 hinein gezogen werden, wonach für die Rohrschelle 1 mit der installierten Leitung 2 noch weniger Raum in Anspruch genommen wird.

Figur 5 zeigt die Rohrschelle 1 von Figur 4 in dreidimensionaler Darstellung und in der in Figur 4 gezeigten Lage, in der das flexible Aufnahmesegment 1111 in das U-Profil-förmige Montageteil 112 hineinragt. Ferner sind im Montageteil 112 vorgesehene Montageöffnungen 31, 32 gezeigt, durch die Montageschrauben 91 hindurch führbar sind, mittels derer die Rohrschelle 1 an einer Wand 82 oder einer Decke 81 montierbar ist.

Figur 6 zeigt die Rohrschelle 1 von Figur 4, welche mit dem dritten Montageteilstück 1122 des Montageteils 112 an der Decke 81 des Gebäudes montiert ist. Die installierte Leitung 2 ist in diesem Fall vom Montageteil 112 und vom Aufnahmeteil 111 umschlossen und mittels des Abschlusselements 12 fixiert. Auch in dieser Lage der Rohrschelle 1 kann die Leitung 2 jedoch auch von aussen auf das Aufnahmeteil 111 aufgelegt und mit dem Abschlusselement 12 fixiert, gegebenenfalls in das U-Profil des Montageteils 112 hinein gedrückt werden.

Figur 7 zeigt die Rohrschelle 1 von Figur 4 in dreidimensionaler Darstellung und in der in Figur 6 gezeigten Lage, in der das flexible Aufnahmesegment 1111 nach aussen ragt.

Die erfindungsgemässe Rohrschelle 1 kann daher in vielfältiger Weise montiert und mit der zu installierenden Leitung 2 verbunden werden.

Aus Figur 4 ist ersichtlich, dass das flexible Aufnahmesegment 1111 eine Leitung 2, 2' mit einem in einem weiten Bereich liegenden Durchmesser aufnehmen und spielfrei halten kann. Der minimale Durchmesser dₘᵢₙ und maximale Durchmesser dₘₐₓ können sich um einen Faktor n unterscheiden (dₘₐₓ - n * dₘᵢₙ), der beispielsweise zwischen 1 und 5 liegt.

Im Gegensatz zur Rohrschelle von Figur 1 werden Leitungen 2 mit der erfindungsgemässen Rohrschelle 1 schonend gehalten, obwohl keine elastischen Lagerelemente montiert sind.

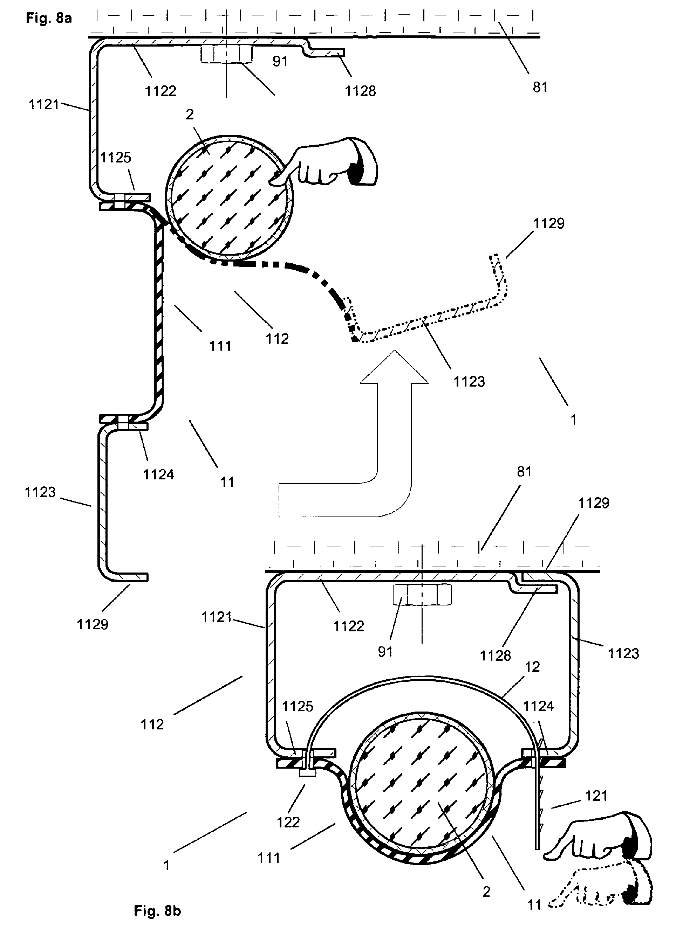

Figur 8a und 8b zeigt die Rohrschelle 1 von Figur 6 mit einem aus zwei Elementen bestehenden Montageteil 112. Das erste Element des Montageteils 112 besteht aus den Montageteilstücken 1121, 1122. Das zweite Element des Montageteils 112 besteht aus dem Montageteilstück 1123. An den beiden Elementen bzw. an den Montageteilstücken 1122 und 1123 sind zueinander korrespondierende Kopplungselemente 1128, 1129 vorgesehen, die eine Kopplungsvorrichtung bilden.

In dieser vorzugsweisen Ausgestaltung kann die Rohrschelle 1 geöffnet und eine zu installierende Leitung 2 eingelegt werden. Anschliessend wird das zweite Element des Montageteils 112 bzw. das dritte Montageteilstück 1123 erfasst und mit dem zweiten Element bzw. dem zweiten Montageteilstück 1122 verbunden, wonach die Leitung 2 vom Montageteil 112 und vom Aufnahmeteil 111 umschlossen ist.

In Figur 8a wurde die Rohrschelle 1 geöffnet und eine Leitung 2 eingeführt. Mit einem weiteren Handgriff wird die Verbindung zwischen den Kopplungselementen 1128 und 1129 des Montageteils 112 erstellt und die Rohrschelle 1 mit der darin gehaltenen Leitung 2 wieder verschlossen.

Figur 8b zeigt die Rohrschelle 1 von Figur 8a nach dem Einlegen der Leitung 2 und dem Verschließen der Kopplungsvorrichtung 1128, 1129.

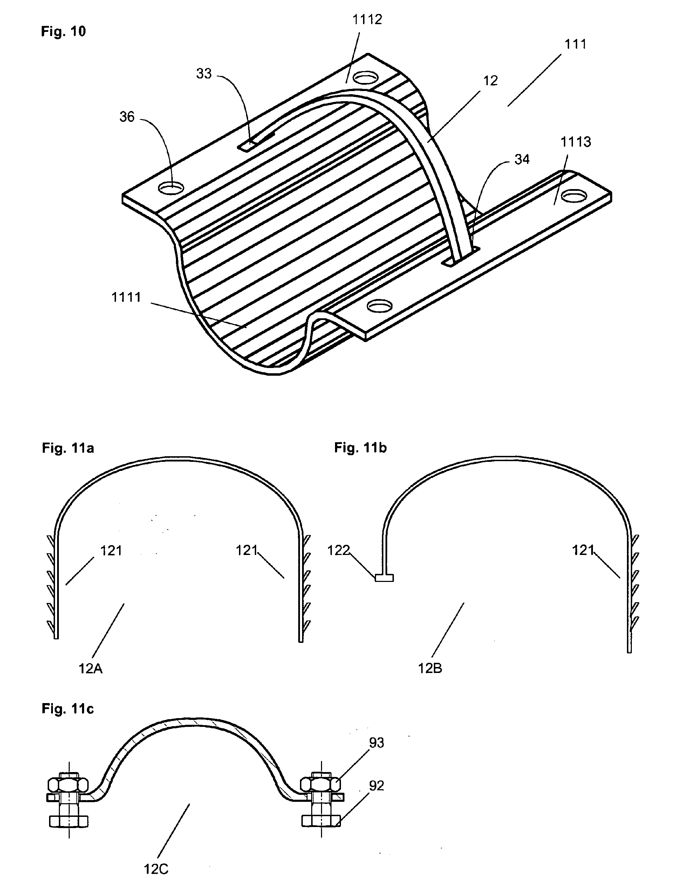

Figur 9 zeigt die an einer Wand 82 montierte Rohrschelle 1 von Figur 8 in einer vorzugsweisen Ausgestaltung. Zur Montage der Rohrschelle 1 ist die Montageschraube 91 durch das erste Montageteilstück 1121 hindurchgeführt. Die Kopplungselemente 1128 und 1129 sind derart geformt, dass sie seitlich ineinander verschoben werden können. Das eine Kopplungselement 1129 wird dabei vom anderen Kopplungselement 1128 umklammert. Die installierte Leitung 2 ist von außen auf das Aufnahmeteil 111 aufgesetzt und mittels des schematisch gezeigten Abschlusselements 12 gehalten, welches in den Figuren 11a, 11b und 11c in vorzugsweisen Ausgestaltungen gezeigt ist.

Die Flanschelemente 1124 und 1125 des Montageteils 112 sind mittels Verbindungselementen bzw. Nieten 94, 94 mit den Endstücken 1112, 1113 des Aufnahmeteils 111 verbunden.

Figur 10 zeigt ein vorzugsweise ausgestaltetes Aufnahmeteil 111 mit einem in Montageöffnungen 33, 34 gehaltenen Abschlusselement 12 und mit Montageöffnungen 36, mittels derer das Aufnahmeteil 111 z.B. anhand von Schrauben oder Haken mit dem Montageteil 112 verbindbar ist. Die zu installierende Leitung 2 kann daher bereits vor der Montage des Montageteils 112 in das Aufnahmeteil 111 eingelegt und mittels des Abschlusselements 12 fixiert werden. Nach der Installation des Montageteils 112 kann die Leitung mit dem Aufnahmeteil 111 bedarfsweise vom Montageteil 112 wieder gelöst werden. Diese Lösung ergibt verschiedene Vorteile. Einerseits kann die Rohrschelle 1 an Stellen montiert werden, die für die Installation der Leitung ansonsten kaum zugänglich sind. Ferner ist es bei der Installation von Kabeln oft vorteilhaft, wenn ein Kabel mit wenigen Handgriffen wieder entnommen und installiert werden kann. Insbesondere nach der Installation eines Montageteils 112 an der Decke eines Gebäudes ist es dabei besonders vorteilhaft, wenn der Installateur das Kabel an einer für ihn bequem zugänglichen Stelle mit dem Aufnahmeteil 111 verbinden kann. Die Verbindung des Aufnahmeteils 111 mit dem Montageteil 112, beispielsweise durch Einhängen in einen Haken oder Klinkenverschluss kann dabei wiederum bequem mit einem Handgriff erfolgen.

Figur 11a zeigt ein flexibles Abschlusselement 12 aus Metall oder Kunststoff, welches an beiden Enden mit Verbindungselementen 121 versehen ist, die in Montageöffnungen 33, 34 im Aufnahmeteil 111 oder im Montageteil 112 einrasten können.

Figur 11b zeigt ein flexibles Abschlusselement 12, welches an einem Ende mit Verbindungselementen 121 und am anderen Ende mit einem Ankerelement 122 versehen ist, das der Verankerung in einer der Montageöffnungen 33, 34 dient, wie dies in Figur 8b gezeigt ist.

Grundsätzlich wird es auch möglich, ein Abschlusselement 12 zu verwenden, dessen Enden miteinander verbindbar sind, so dass das Abschlusselement 12 in sich geschlossen ist

## Patentansprüche

1. Rohrschelle (1) für die Installation einer Leitung (2), insbesondere eines Rohres, mit einem ein- oder mehrteiligen Systemelement (11), das ein der Montage der Rohrschelle (1) dienendes ein- oder mehrteiliges Montageteil (112) und ein Aufnahmeteil (111) mit einem ersten und einem zweiten Endstück (1112; 1113) sowie ein flexibles Abschlusselement (12) aufweist, das dem Halten der in das Aufnahmeteil (111) eingelegten Leitung (2) dient und dazu mit dem Systemelement (11) verbindbar ist, wobei die Endstücke (1112; 1113) des Aufnahmeteils (111) fest oder lösbar je mit einem ersten und/oder einem zweiten Montageteilstück (1121; 122) des Montageteils (112) verbunden sind, die mit wenigstens einem Montageelement (31; 32) versehen sind **dadurch gekennzeichnet, dass** das Aufnahmeteil (111) ein Aufnahmesegment (1111) aus flexiblem Material, wie Kunststoff, Textilien, oder Naturstoff wie Leder, aufweist, wobei das Aufnahmesegment (111) derart flexibel und/oder dehnbar ist, dass es die auf dessen Unterseite oder Oberseite eingelegte Leitung (2) teilweise umfassen kann.

2. Rohrschelle (1) nach Anspruch 1, **dadurch gekennzeichnet, dass** das einseitig oder beidseitig gehaltene Aufnahmeteil (111) vollständig aus flexiblem Material besteht.

3. Rohrschelle (1) nach Anspruch 1 oder 2, **dadurch gekennzeichnet, dass** das flexible Aufnahmesegment (1111) einstückig mit den vorzugsweise starren Endstücken (1112; 1113) des Aufnahmeteils (111) verbunden und gegebenenfalls durch mechanische, thermische oder chemische Behandlung flexibilisiert ist.

4. Rohrschelle (1) nach Anspruch 1 oder 2, **dadurch gekennzeichnet, dass** das flexible Aufnahmesegment (1111) durch mechanische Verbindungsmittel, wie Nieten, Haken, Klemmen oder ineinander greifende Profile mit den Endstücken (1112; 1113) des Aufnahmeteils (111) verbunden ist.

5. Rohrschelle (1) nach einem der Ansprüche 1 - 4, **dadurch gekennzeichnet, dass** das erste und zweite Montageteilstück (1121; 1122) zusammen mit einem dritten Montageteilstück (1123) ein U-Profil bilden, wobei wenigstens eines der Montageteilstücke (1121; 1122, 1123) mit wenigstens einem Montageelement (31; 32) versehen ist.

6. Rohrschelle (1) nach einem der Ansprüche 1 - 5, **dadurch gekennzeichnet, dass** das erste und/oder das zweite Endstück (1112, 1113) des Aufnahmeteils (111) mittels Schrauben oder Nieten (92, 93) fest oder mittels Montageöffnungen, Haken oder Klammern (36; 1127) lösbar mit einem Flanschelement (1124, 1125) des ersten bzw. zweiten Montageteilstücks (1121; 1122) verbunden sind.

7. Rohrschelle (1) nach einem der Ansprüche 1 - 6, **dadurch gekennzeichnet, dass** das Montageteil (112) innerhalb der Montageteilstücke (1121; 1122; 1123) oder zwischen zwei Montageteilstücken (1121, 1122, 1123) eine Kopplungsvorrichtung mit Kopplungselementen (1128 bzw. 1129) aufweist, welche vorzugsweise an die entsprechenden Teile der Montageteilstücke (1121, 1122, 1123) angeformt sind oder dass ein der Kopplungselement (1128 bzw. 1129) der Kopplungsvorrichtung an einem Endstück (1112; 1113) des Aufnahmeteils (111) und das andere Kopplungselement(1129 bzw. 1128) der Kopplungsvorrichtung an einem Endstück (1124; 1125) des Montageteils (112) vorgesehen ist.

8. Rohrschelle (1) nach einem der Ansprüche 1 - 7, **dadurch gekennzeichnet, dass** die beiden Enden des vorzugsweise flexiblen Abschlusselements (12; 12A; 12B; 12C)
a) mittels Verbindungselementen (92, 93) mit den Endstücken (1112; 1113) des Aufnahmeteils (111), mit dem Aufnahmesegment (111) und/oder den Montageteilstücken (1121; 1122) des Montageteils (112) verbindbar sind; oder
b) mit identischen oder unterschiedlichen Verbindungselementen (121, 122) versehen sind, die in einer von gegebenenfalls mehreren Aufnahmeöffnungen (33, 34) verankert und/oder an gewählten Positionen gehalten sind, die in den beiden Endstücken (1112; 1113) des Aufnahmeteils (111) und/oder im Aufnahmesegment (1111) und/oder den Montageteilstücken (1121; 1122) des Montageteils (112) vorgesehen sind; oder
c) mit unterschiedlichen Verbindungselementen (121, 122) versehen sind, die durch Aufnahmeöffnungen (33, 34), die in den beiden Endstücken (1112; 1113) des Aufnahmeteils (111) und/oder im Aufnahmesegment (1111) und/oder den Montageteilstücken (1121; 1122) des Montageteils (112) vorgesehen sind, hindurchgeführt und miteinander verbunden sind.

9. Rohrschelle (1) nach einem der Ansprüche 1 - 8, **dadurch gekennzeichnet, dass** das Montageteil (112) ein viertes Montageteilstück (1124) aufweist, welches mit den weiter Montageteilstücken (1121, 1122, 1123) ein Rechteckprofil bildet, innerhalb dessen das Aufnahmeteil (111) vorzugsweise lösbar verankert bzw. befestigt ist.

10. Rohrschelle (1) nach einem der Ansprüche 1 - 9, **dadurch gekennzeichnet, dass** eines der Montageteilstücke (1121; 1122; 1123; 1124) mittels nur einer Montageschraube (91) mit der Decke oder einer Wand (8) eines Gebäudes oder mit einer Montagevorrichtung (61, 62) verbunden ist.

11. Rohrschelle (1) nach einem der Ansprüche 1 - 10, **dadurch gekennzeichnet, dass** das Systemelement (11) einstückig ausgestaltet, vorzugsweise aus einem Blechstück ausgestanzt und gebogen ist.

12. Rohrschelle (1) nach einem der Ansprüche 1 - 11, **dadurch gekennzeichnet, dass** das Abschlusselement (12) aus Metall oder Kunststoff gefertigt und vorzugsweise bandförmig ausgestaltet ist.

13. Rohrschelle (1) nach einem der Ansprüche 1 - 12, **dadurch gekennzeichnet, dass** wenigstens eines der Montageteilstücke (1121, 1122, 1123) mit weiteren Montageöffnungen (33, 34) für ein weiteres Abschlusselement (12) versehen ist, mittels dessen eine weitere Leitung (2) innerhalb oder ausserhalb des Montageteils 12 installierbar ist.

14. Rohrschelle (1) nach Anspruch 13, **dadurch gekennzeichnet, dass** für die weitere Leitung (2) ein vorzugsweise elastisches Lagerelement vorgesehen ist.

## Claims

1. Pipe clamp (1) for the installation of a conduit (2), particularly a pipe, with a one-part or multi-part system element (11), which comprises a one-part or multi-part mounting part (112) serving for mounting the pipe clamp (1) and a supporting element (111) with a first and a second end piece (1112; 1113) as well as a flexible closing element (12), which serves for holding the conduit (2) deposited in the supporting element (111) and which for this purpose is connectable with the system element (11), wherein the end pieces (1112; 1113) of the supporting element (111) are firmly or releasably connected each with a first and/or a second mounting piece (1121; 1122) of the mounting part (112), which are provided with at least a mounting element (31; 32), **characterised in that** the supporting element (111) comprises a supporting segment (1111) of flexible material, such as plastic, textiles, or natural material such as leather, wherein the supporting segment (111) is flexible and/or expandable in such a way, that it can partially encompass a conduit (2) that has been deposited on its lower side or upper side.

2. Pipe clamp (1) according to claim 1, **characterised in that** the supporting element (111), which is held on one side or both sides, consists completely of flexible material.

3. Pipe clamp (1) according to claim 1 or 2, **characterised in that** the flexible supporting segment (1111) is connected in one piece with the preferably rigid end pieces (1112; 1113) of the supporting element (111) and, if appropriate, are flexibilised by mechanical, thermal or chemical treatment.

4. Pipe clamp (1) according to claim 1 or 2, **characterised in that** the flexible supporting segment (1111) is connected to the end pieces (1112; 1113) of the supporting element (111) by mechanical connecting means, such as rivets, hooks, clamps or interlocking profiles.

5. Pipe clamp (1) according to one of the claims 1 - 4, **characterised in that** the first and the second mounting piece (1121; 1122) together with a third mounting piece (1123) form a U-profile, wherein at least one of the mounting pieces (1121; 1122, 1123) is provided with at least one mounting element (31; 32).

6. Pipe clamp (1) according to one of the claims 1 - 5, **characterised in that** the first and/or the second end piece (1112, 1113) of the supporting element (111) are connected firmly by means of screws or rivets (92, 93) or releasably by means of mounting openings, hooks or clamps (36; 1127) with a flange element (1124, 1125) of the first or second mounting piece (1121; 1122).

7. Pipe clamp (1) according to one of the claims 1 - 6, **characterised in that** the mounting part (112) comprises within the mounting pieces (1121; 1122; 1123) or between the mounting pieces (1121, 1122, 1123) a coupling device with coupling elements (1128 or 1129), which preferably are formed onto the corresponding parts of the mounting pieces (1121, 1122, 1123) or that one of the coupling elements (1128 or 1129) of the coupling device is provided on an end piece (1112; 1113)- of the supporting element (111) and that the other coupling element (1129 or 1128) of the coupling device is provided on an end piece (1124; 1125) of the mounting part (112).

8. Pipe clamp (1) according to one of the claims 1 - 7, **characterised in that** the two ends of the preferably flexible closing element (12; 12A; 12B; 12C)
a) are connectable by means of connecting elements (92, 93) with the end pieces (1112; 1113) of the supporting element (111), with the supporting segment (111) and/or with the mounting pieces (1121; 1122) of the mounting part (112); or
b) are provided with identical or different connecting elements (121, 122), which are anchored in one of, if appropriate, a plurality of receiving openings (33, 34) and/or are held at selected positions, which are provided in the two end pieces (1112; 1113) of the supporting element (111) and/or in the supporting segment (1111) and/or the mounting pieces (1121; 1122) of the mounting part (112); or
c) are provided with different connecting elements (121, 122), which are guided through receiving openings (33, 34), which are provided in the two end pieces (1112; 1113) of the supporting element (111) and/or in the supporting segment (1111) and/or the mounting pieces (1121; 1122) of the mounting part (112) and are connected with one another.

9. Pipe clamp (1) according to one of the claims 1 - 8, **characterised in that** the mounting part (112) a fourth mounting piece (1124), which together with the further mounting pieces (1121, 1122, 1123) forms a rectangular profile, within which the supporting element (111) is preferably releasably anchored or mounted.

10. Pipe clamp (1) according to one of the claims 1 - 9, **characterised in that** one of the mounting pieces (1121; 1122; 1123; 1124) is connected by means of a mounting screw (91) with the ceiling or a wall (8) of a building or with a mounting device (61, 62).

11. Pipe clamp (1) according to one of the claims 1 - 10, **characterised in that** the system element (11) is formed from one piece and is preferably punched out of a metal sheet and is bent.

12. Pipe clamp (1) according to one of the claims 1 - 11, **characterised in that** the closing element (12) is made from metal or plastic and preferably is formed as a ribbon.

13. Pipe clamp (1) according to one of the claims 1 - 12, **characterised in that** at least one of the mounting pieces (1121, 1122, 1123) is provided with further mounting openings (33, 34) for a further closing element (12), with which a further conduit (2) is installable within or outside of the mounting part 12.

14. Pipe clamp (1) according to claim 13, **characterised in that** for the further conduit (2) a preferably elastic support element is provided.

## Revendications

1. Collier de fixation de tuyau (1) pour l'installation d'un conduit (2), en particulier d'un tuyau, comprenant un élément de système (11) d'une seule partie ou en plusieurs parties qui présente une pièce de montage (112) en une ou plusieurs parties servant au montage du collier de fixation de tuyaux (1) et une pièce de logement (111) avec une première et une seconde pièce d'extrémité (1112 ; 1113), ainsi qu'un élément de fermeture flexible (12) qui sert au maintien du conduit (2) introduit dans la pièce de logement (111) et est reliable pour ce faire à l'élément de système (11), les pièces d'extrémité (1112 ; 1113) de la pièce de logement (111) étant reliées de manière fixe ou amovible respectivement à une première et/ou une seconde pièce partielle de montage (11121 ; 1122) de la pièce de montage (112), qui sont munies au moins d'un élément de montage (31 ; 32), **caractérisé en ce que** la pièce de logement (111) présente un segment de logement (1111) en matériau flexible, tel qu'une matière plastique, textile ou matière naturelle telle que le cuir, le segment de logement (111) étant extensible et/ou flexible de sorte qu'il peut entourer partiellement la conduite (2) introduite sur sa face inférieure ou supérieure.

2. Collier de fixation de tuyau (1) selon la revendication 1, **caractérisé en ce que** la pièce de logement (111) maintenue d'un côté ou des deux côtés se compose entièrement de matériau flexible.

3. Collier de fixation de tuyau (1) selon la revendication 1 ou 2, **caractérisé en ce que** le segment de logement flexible (1111) est relié d'une seule pièce aux pièces d'extrémité (1112 ; 1113) de préférence rigides de la pièce de logement (111) et est flexibilisé éventuellement par un traitement mécanique thermique ou chimique.

4. Collier de fixation de tuyau (1) selon la revendication 1 ou 2, **caractérisé en ce que** le segment de logement flexible (1111) est relié par des moyens de connexion mécanique, tels que des rivets, des crochets, des pinces ou des profilés s'interpénétrant, aux pièces d'extrémité (1112; 1113) de la pièce de logement (111).

5. Collier de fixation de tuyau (1) selon l'une des revendications 1 à 4, **caractérisé en ce que** la première et la seconde pièce partielle de montage (1121 ; 1122) forment ensemble avec une troisième pièce partielle de montage (1123) un profilé en U, au moins l'une des pièces partielles de montage (1121 ; 1122; 1123) étant munie d'au moins un élément de montage (31 ; 32).

6. Collier de fixation de tuyau (1) selon l'une des revendications 1 à 5, **caractérisé en ce que** la première et/ou la seconde pièce d'extrémité (1112, 1113) de la pièce de logement (111) sont reliées par vis ou rivets (92, 93) fixement ou de manière amovible par des ouvertures de montage, des crochets ou des agrafes (36 ; 1127) à un élément de bride (1124, 1125) de la première respectivement seconde pièce partielle de montage (1121 ; 1122) .

7. Collier de fixation de tuyau (1) selon l'une des revendications 1 à 6, **caractérisé en ce que** la pièce de montage (112) présente à l'intérieur des pièces partielles de montage (1121 ; 1122 ; 1123) ou entre deux pièces partielles de montage (1121, 1122, 1123) un dispositif d'accouplement avec des éléments d'accouplement (1128 respectivement 1129), qui sont moulés de préférence aux parties correspondantes des pièces partielles de montage (1121, 1122, 1123) et **en ce qu'**un des éléments d'accouplement (1128 respectivement 1129) du dispositif d'accouplement est prévu sur une pièce d'extrémité (1112 ; 1113) de la pièce de logement (111) et l'autre élément d'accouplement, (1129 respectivement 1128) du dispositif d'accouplement est prévu sur une pièce d'extrémité (1124 ; 1125) de la pièce de montage (112).

8. Collier de fixation de tuyau (1) selon l'une des revendications 1 à 7, **caractérisé en ce que** les deux extrémités de l'élément de fermeture flexible (12; 12A; 12B; 12C)
a) sont reliables au moyen d'éléments de connexion (92, 93) aux pièces d'extrémité (1112 ; 1113) de la pièce de logement (111), au segment de logement (111) et/ou aux pièces partielles de montage (1121 ; 1122) de la pièce de montage (112) ; ou
b) sont munies d'éléments de connexion identiques ou différents (121, 122) qui sont ancrés dans une ou éventuellement plusieurs ouvertures de logement (33, 34) et/ou maintenus dans des positions sélectionnées qui sont prévues dans les deux pièces d'extrémité (1112 ; 1113) de la pièce de logement (111) et/ou dans le segment de logement (1111) et/ou dans les pièces partielles (1121 ; 1122) de la pièce de montage (112) ; ou
c) sont munies d'éléments de connexion différents (121, 122) qui sont reliés ensemble et guidés à travers une ou éventuellement plusieurs ouvertures de logement (33, 34) qui sont prévues dans les deux pièces d'extrémité (1112 ; 1113) de la pièce de logement (111) et/ou dans le segment de logement (1111) et/ou les pièces partielles (1121 ; 1122) de la pièce de montage (112).

9. Collier de fixation de tuyau (1) selon l'une des revendications 1 à 8, **caractérisé en ce que** la pièce de montage (112) présente une quatrième pièce de montage partielle (1124) qui forme avec les autres pièces de montage partielles (1121, 1122, 1123) un profilé rectangulaire à l'intérieur duquel la pièce de logement (111) est ancrée respectivement fixée de préférence de manière amovible.

10. Collier de fixation de tuyaux (1) selon l'une des revendications 1 à 9, **caractérisé en ce que** l'une des pièces partielles de montage (1121 ; 1122 ; 1123 ; 1124) est reliée au moyen seulement d'une vis de montage (91) au plafond ou à un mur (8) d'un bâtiment ou à un dispositif de montage (61, 62).

11. Collier de fixation de tuyau (1) selon l'une des revendications 1 à 10, **caractérisé en ce que** l'élément de système (11) est réalisé d'une seule pièce, de préférence est découpé et plié à partir d'une tôle.

12. Collier de fixation de tuyau (1) selon l'une des revendications 1 à 11, **caractérisé en ce que** l'élément de fermeture (12) est fabriqué à partir de métal ou de matière plastique et est réalisé de préférence en forme de bande.

13. Collier de fixation de tuyau (1) selon l'une des revendications 1 à 12, **caractérisé en ce qu'**au moins l'une des pièces partielles de montage (1121, 1122, 1123) est munie d'autres ouvertures de montage (33, 34) pour un autre élément de fermeture (12) au moyen duquel un autre conduit (2) peut être installé à l'intérieur ou à l'extérieur de la pièce de montage (12).

14. Collier de fixation de tuyau (1) selon la revendication 13, **caractérisé en ce qu'**il est prévu pour l'autre conduit (2) un élément de palier de préférence élastique.
